# EUROPEAN PATENT SPECIFICATION

(11) **EP 1 849 588 B1**
(45) Date of publication and mention of the grant of the patent: **01.06.2011**
(21) Application number: 06008760.8
(22) Date of filing: 27.04.2006
(51) Int. Cl.: B29C 70/74, B29C 70/68, B29C 53/56, B29C 70/86, B29C 70/20, B29C 70/32, B29C 70/38, B29K 105/08, B29K 309/08, B29K 307/04, B29K 311/10, B29K 277/00, B29K 267/00, B29K 77/00, B29K 71/00

(54) **Method of manufacture of a composite part**
Verfahren zur Herstellung eines Verbundwerkstoffteils
Procédé de fabrication d'une pièce en matériau composite

(43) Date of publication of application: 31.10.2007
(73) Proprietor: AKsys GmbH, 67547 Worms (DE)
(72) Inventor: Meinert, Hans-Dieter, 72622 Nürtingen (DE); Braun, Dominik, 72666 Neckartailfingen (DE)
(74) Representative: Müller, Frank Peter

(56) References cited:
- EP-A- 1 342 553
- WO-A-98/08655
- WO-A-98/15404
- FR-A- 2 560 551
- FR-A1- 2 739 802
- GB-A- 836 501
- GB-A- 1 134 033
- GB-A- 1 279 016
- GB-A- 2 380 984
- JP-A- 61 049 833
- US-A- 4 594 122
- US-A- 5 415 463
- US-A1- 2003 010 424

## Description

### Technical field

The invention concerns the reinforcement of plastic parts which are produced in thermoplastic injection and/or compression processes.

### Prior art

Due to their specific final purpose or other reasons, some types of plastic parts need to be reinforced in order to provide the part with specific properties, which plastic alone cannot offer. One such example is a structural part of a vehicle, which must fulfill some determined requirements, such as providing a high impact resistance without an excessive weight. These requirements demand that a structural part of a vehicle is reinforced with additional materials or parts, distributed in a specific way so as to provide optimum reinforcement without excessively increasing the final weight of the reinforced structural part.

In the current technology situation, there are diverse solutions for the reinforcement of a plastic part, which can be grouped into two main concepts. The first concept is based on the idea that the plastic part is reinforced during its conformation, by adding a material or a pre-shaped part to the injection process of the plastic part. An example of this first concept basically entails the use of a steel plate as reinforcement, and the transformation of the reinforced plastic part by means of a plastic overmoulding process applied to the steel plate. In this process, the physical connection between the plastic and the steel is usually achieved by making a series of perforations in the steel plate, which are penetrated by the plastic during the over moulding process.

The second concept is based on the idea that the plastic part is reinforced after shaping, by assembling it to a reinforcing part which has already been shaped and is generally made of metal. The assembly of the plastic part to the reinforcing part is generally carried out using screws, rivets, formation of plastic junctions by ultrasound or other appropriate assembly methods.

Document WO 01/77771 discloses a method of manufacture of a composite part comprising a main part made of pultruded fiberglass and metal bushings reinforced with a reinforcement coated of thermoplastic polymer This method of manufacture comprises the steps of directly applying, by means of an application means, at least one continuous fibre-based filament on the main part, where there exists a relative movement between said application means and said main part so that the fibre-based filament is arranged on the main part to obtain a fibre part of fibre-based filament.

All plastic part reinforcement solutions aim to improve the relatively low impact resistance of plastic, the relatively low rigidity of plastic and the limited capacity of plastic to stretching without breaking. The reinforcement generally used is metallic, as metal offers complementary qualities to those of plastic. However, the use of metal presents certain disadvantages, namely, an excessive increase in weight of the final part, certain recycling difficulties of the final part (as recycling requires the separation of the plastic and the metal) and an increase in the final cost of the part.

### Brief description of the invention

One object of the invention is to define a composite part reinforced by means of a fibre framework that is preferably unidirectional and continuous. According to the invention, the reinforced part consists of a main part which may or may not be reinforced by other means (these other means are irrelevant to the present invention), and at least one fibre part. Each fibre part is produced by means of the arrangement of at least one continuous fibre-based filament or cord or strand, arranged in a preferably unidirectional and continuous manner along a specific reinforcement outline or contour in the main part, and arranged in one or more loops along said specific reinforcement outline or contour in order to define a winding.

Optionally, the reinforcing winding may not be unidirectional, although it is considered that the embodiment with the best mechanical performance is that in which the fibre-based filament is arranged as a continuous cord or strand that is unidirectionally oriented along the specific reinforcement contour of the main part. The unidirectional framework provides a reinforcing performance comparable to common metal reinforcements in the current technology situation, without negatively affecting the final weight of the reinforced part.

The fibre part may be two- or three-dimensional, whereby two-dimensional is understood to be a fibre part whose apexes, inflection points or other characteristic points which may exist in the wound part are fundamentally or substantially located on the same plane, whilst a three-dimensional fibre part is understood to be a part in which not all of these characteristic points are located substantially coplanar. The three-dimensional fibre part embodiments are useful for example to ensure that the fibre part adapts to the shape of the main part, which is not generally flat but usually presents a complex three-dimensional geometry as a result of the varied functions which the final structural reinforced part should incorporate. Furthermore, given the limited space in the vehicle, the fibre part which reinforces the main part must normally be limited to the free spaces within the main part (spaces not used by other components connected to the main part), which increases the complexity of the three-dimensional form of the fibre part. In addition, the fact that the fibre part presents a three-dimensional geometry allows said fibre part to offer a greater rigidity to flexing and twisting in diverse axes, improving its reinforcing performance compared with two-dimensional fibre part embodiments.

The direct application of the fibre-based filament onto a mould or the main part may directly produce three-dimensional fibre parts (depending on the geometry of the mould or the main part).

A first embodiment which is part of the invention is inherent to the case of direct application of the fibre filament onto the main part, as the fibre part and the main part are become welded as a consequence of this direct application. A second embodiment which is not part of the invention, is the connection of the fibre part to the main part by mechanical means, adhesive means or other means and is applicable to those cases in which the fibre part is manufactured either on a support or on a mould. A third embodiment of the connection method between the fibre part and the main part is based on overmoulding the main part on a pre-manufactured fibre part, and is also applicable to those cases in which the fibre part is manufactured either on a support or on a mould. The third embodiment is also not part of the invention.

### Brief description of the figures

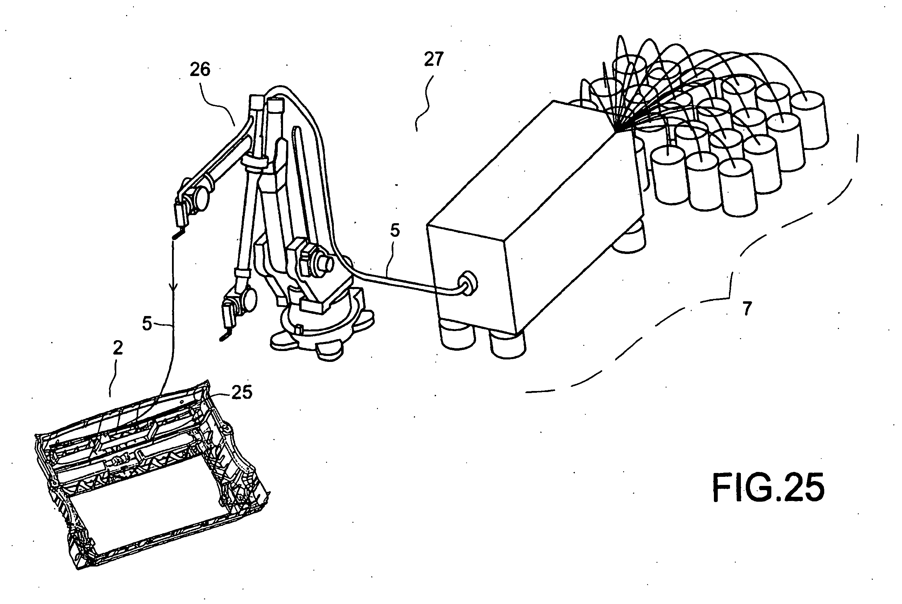

The details of the invention according to claim 1 can be seen in figure 25, which do not intend to limit the scope of the invention:
The embodiments in figures 12, 13, 20 to 24 and 26 are not part of the invention as defined in the appended claims.
- Figure 1 shows an enlarged partial view of a reinforced part according to the invention.
- Figure 2 shows a complete reinforced part according to the invention.
- Figure 3 shows an enlarged partial view of the reinforced part in Figure 2.
- Figures 4 to 19 show partial views of different embodiments of the reinforced part according to the invention.
- Figure 20 shows a first method of manufacture of the fibre part which substantially forms the reinforcement of the reinforced part according to the invention.
- Figure 21 shows an additional step which may be included in the method of Figure 20, for the conformation of concave parts in the fibre part.
- Figure 22 shows an additional step which may be included in the method of Figure 20, for the conformation of a three-dimensional fibre part.
- Figure 23 shows a second method of manufacture of the fibre part.
- Figure 24 shows a third method of manufacture of the fibre part.
- Figure 25 shows a fourth method of manufacture of the fibre part and the reinforced part.
- Figure 26 shows a fifth method of manufacture of the fibre part.

### Detailed description of the invention

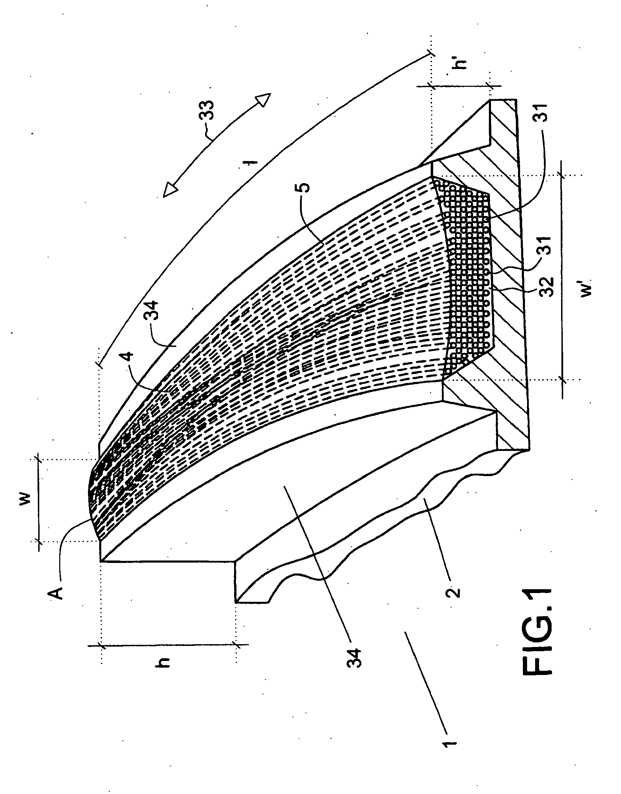

Figure 1 shows an enlarged partial view of a reinforced part (1) according to the invention, consisting of a main part (2) and a fibre part (4) produced by the arrangement of one or more fibre-based filaments (5) in a unidirectional and continuous manner. The aim of this figure is to illustrate the meaning of the unidirectional and continuous concepts for the purposes of the invention, and for this aim the figure supposed a main part (2) that is a thermoplastic part which needs to be reinforced in a specific region or contour represented in the figure by a zone with length (I) and variable width (w, w') and variable height (h, h'). The solution presented by the invention is to provide this contour with a series of fibre-based filaments (5) arranged in a substantially unidirectional manner, i.e., mainly aligned (allowing certain variations) in the longitudinal direction (33) of the contour. In the case of the figure, the fibre-based filaments (5) are made of continuous fibre filaments (31) equipped with a matrix material (32), and are arranged along the contour in a continuous manner, i.e., without interruption of the fibre-based filament (5) during the development, shaping or confirmation of the fibre part (4), in such a way that all fibre-based filaments (5) are part of the same cord or strand which may consist on one or more fibre rovings. In the case of the figure, it can be observed that the fibre part (4) is positioned between two walls (34) of the main part (2).

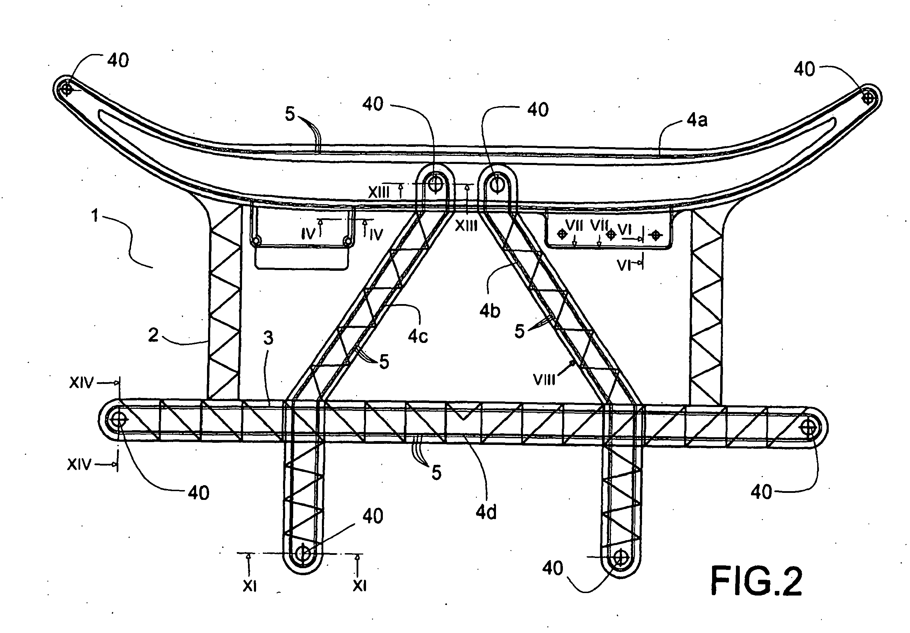

Figure 2 shows a full view of a reinforced part (1) according to the invention. The reinforced part (1) consists of the aforementioned main part (2), generally made out of a thermoplastic material, and a reinforcement (3). In the case of the figure, the reinforcemente (3) comprises four fibre parts (4a, 4b, 4c, 4d) in the shape of a cord or strand or fibre-based filament (5) arranged in a variable number of closed loops and in a continuous manner along the respective contours of the main part (2). As can be observed in the figure, in this case, each fibre part (4a, 4b, 4c, 4d) presents a different arrangement, shape and/or size and may consist of the same or a different number of loops of the fibre-based filament (5), may be produced from a similar or different type of fibre-based filament (5), etc.

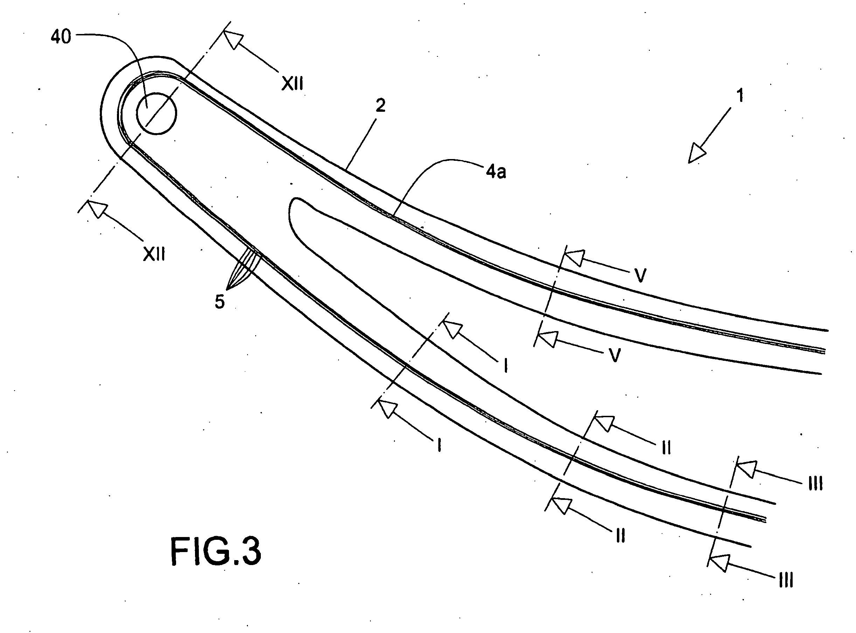

Figure 3 shows an enlarged partial view of the reinforced part (1) of Figure 2, representing different section planes, which shall give rise to subsequent figures.

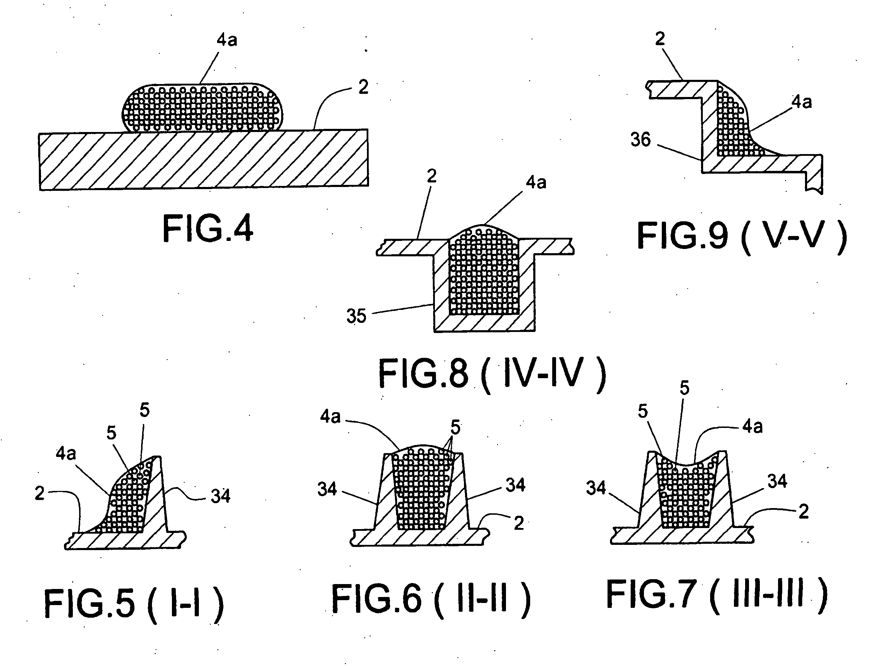

Figures 4 to 19 show diverse examples of constructive elements or details of the reinforced part (1) of figures 2 and 3, to guarantee the union between the fibre parts (4a, 4b, 4c, 4d) and the main part (2), applicable depending on the method of manufacture that is used. It must be considered that the present invention proposes diverse methods of manufacture of the reinforced part (1) equipped with fibre parts (4a, 4b, 4c, 4d) with fibre-based filaments (5) arranged in a unidirectional and continuous manner. In this way, the reinforced part (1) of figures 2 and 3 aims to illustrate fibre parts (4a, 4b, 4c, 4d) produced by different methods of manufacture. In a first method, the fibre part (4a) has been transformed by the direct application of a preheated fibre-based filament (5) onto the main part (2), which followed by the in-situ cooling and welding of both parts (2, 4a).

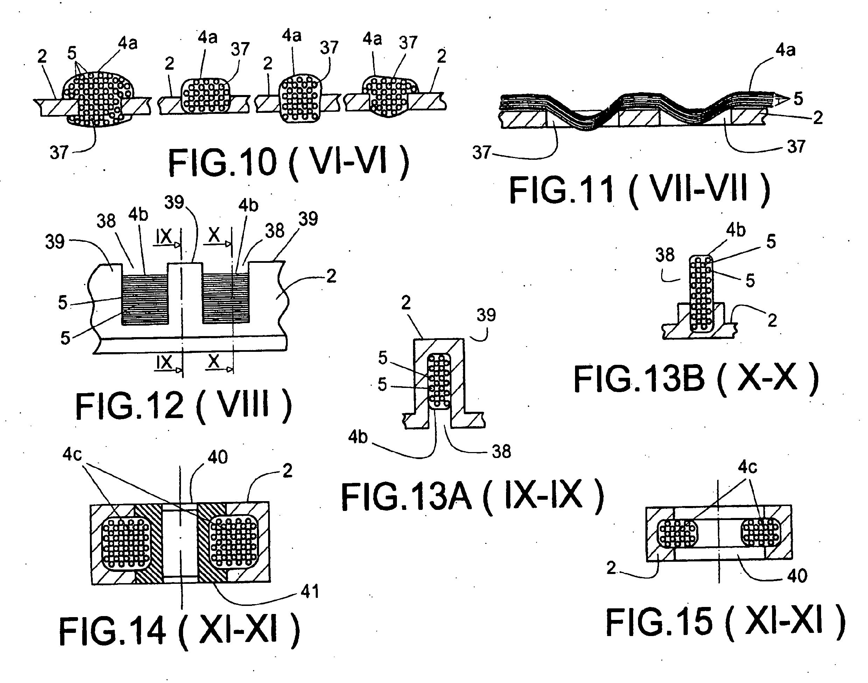

Figures 4 to 10 show several examples of constructive elements which ensure the correct welding of a fibre part (4a) applied directly onto the main part (2). Figure 4 shows a more simplified case, in which the fibre part (4a) has been directly applied to a predominantly flat surface of the main part (2), and both parts (4a, 2) have been successfully welded together thanks to the chemical compatibility between both parts. Figure 5 (section I-I of Figure 3) shows that the main part (2) comprises a nerve or wall (34) against which the fibre part (4a) is also applied, so that the contact surface between parts (2, 4a) is increased and the welding between both parts (2, 4a) is improved. Figures 6 and 7 (sections II-II and III-III of Figure 3 respectively) show alternatives in which the main part (2) has two nerves or walls (34) inside which the fibre-based filaments (5) are arranged to form the fibre part (4a), further increasing the contact area between parts (2, 4a). Figures 8 (section IV-IV of Figure 2) and 9 (section V-V of Figure 3) show two alternatives in which specific shapes of the main part (2) are used, particularly a channel (35) and an angle (36) respectively, as the area on which the fibre part (4a) is received. Figure 10 shows different possible versions of section VI-VI of Figure 2, which are common in the fact that the fibre part (4a) is conformed by using some through openings or orifices (37) present in the main part (2). The versions represented in Figure 10 would correspond, for example, to a lengthwise section VII-VII of the type shown in Figure 11.

The embodiments according to figures 12 and 13 are not part of the invention according to claim 1.

Figure 12 shows a partial view of Figure 2 from viewpoint VIII, in which it can be observed that the main part (2) has been overmoulded onto a fibre part (4b) produced in an external or separate manufacturing process. Figures 13A and 13B show two sections of the reinforced part of Figure 12 in accordance with the section plans IX-IX and X-X respectively, showing how the main part (2) embraces the already consolidated fibre part (4b) in different areas (39) as a result of the consolidated fibre part (4b) in different areas (39) as a result of the overmoulding. In other areas (38) the fibre part (4b) remains uncovered as a result of the presence of positioning elements in the mould in which the overmoulding has been performed. These positioning elements are introduced by the invention in order to prevent the fibre part (4) from becoming distorted due to the pressure of the overmoulding, and to prevent the fibre part (4) from being pushed against the mould, difficulting the flow of material and leading to tension in the reinforced part (1). Obviously, the shape, arrangement and dimensions of both the fibre part (4) and the areas (38, 39) may vary significantly.

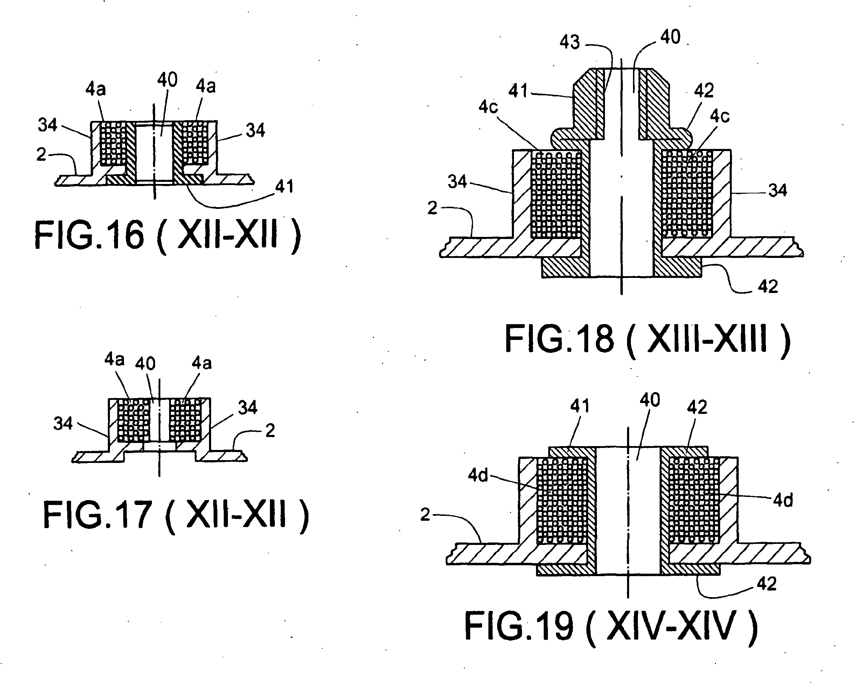

Figures 14 to 19 show sections of the different anchoring points (40) that connect the reinforced part (1) to the vehicle, and where the tension between the reinforced part (1) and the vehicle is concentrated and transferred. A metal bushing (41) may optionally be fitted to these anchoring points (40) to avoid the problem of "cripping" (the easing of tension that occurs due to loads being maintained over time) of the plastics and polymeric materials in general. Figures 14 and 15 show two different embodiments for section XI-XI of Figure 2, corresponding to the anchoring point (40) which connects the vehicle and the reinforced part (1), specifically in an area of the reinforced part (1) in which the fibre part (4c) is located. The figures show the anchoring point (40) with and without the metal bushing (41) respectively. Figures 16 and 17 show section XII-XII of Figure 3, corresponding to the anchoring point (40) which connects the vehicle and the reinforced part (1), specifically in an area of the reinforced part (1) in which the fibre part (4a) is located. The anchoring point (40) is shown with and without the metal bushing (41) respectively. Figure 18 shows section XIII-XIII of Figure 2, in which it can be seen that the anchoring point (40) is made using a metal bushing (41) provided with rivets (42) and a screwed area (43). Paralelly, Figure 19 shows section XIV-XIV of Figure 2, in which it can be seen that the anchoring point (40) is made using a metal bushing (41) that is riveted (42) following assembly. In the figures representing embodiments that include a bushing (41), it can be seen how the fibre part (4a, 4c, 4d) is arranged in the main part (2) to take advantage of the bushing (41) and any rivets (42) as constructive elements that provide support in order to improve the connection between the fibre part (4) and the main part (2).

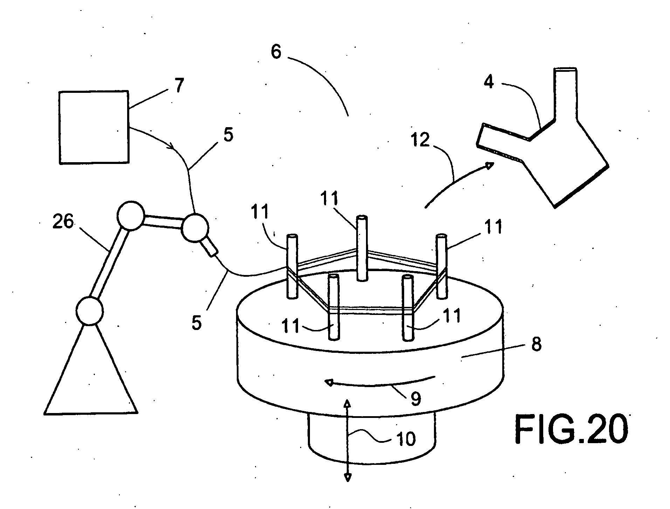

The embodiments in figures 20 to 24 and 26 are not part of the invention as defined in the appended claims.

Figure 20 shows a first method of manufacture (6) of a fibre part (4) in accordance with the invention, which is later intended to be used as reinforcement (3) of a reinforced part (1). In this method of manufacture (6) a fibre-based filament (5) is fed by an application means (26) to a rotating table (8) fitted with some support points (11). In the case of the figure, the rotating table (8) presents a rotating movement (9) in such a way that the fibre-based filament (5) is wound around the support points (11). Additionally, the rotating table (8) may present a transversal movement (10) in order to obtain a fibre part (4) of an appropriate height. Once the fibre part (4) has been developped or conformed (4) around the support points (11), said fibre part (4) is removed (12) from the rotating table (8) either manually or using a specially designed machine.

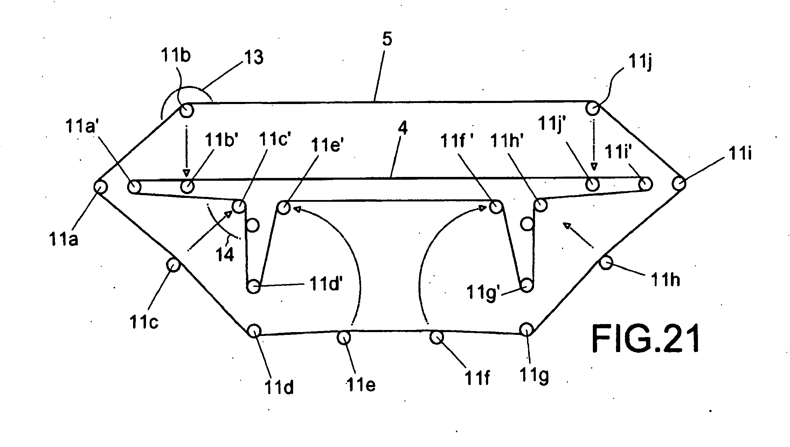

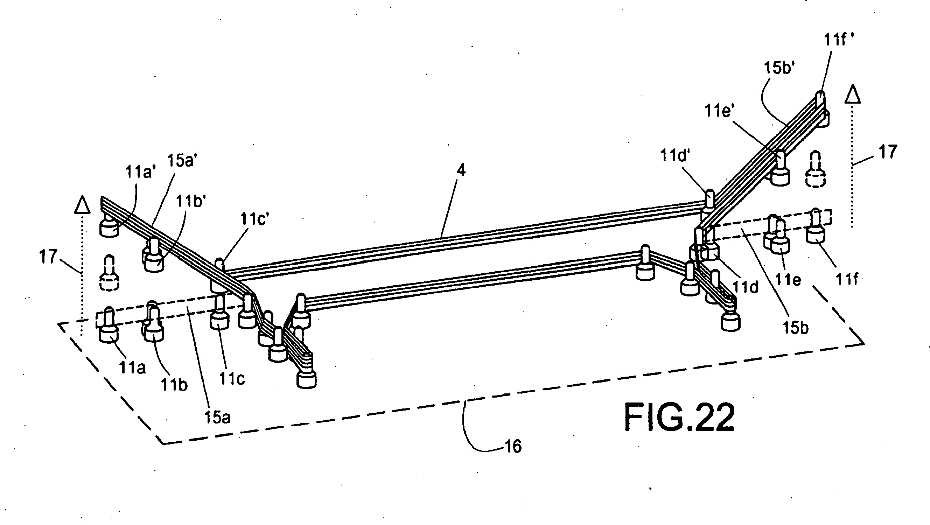

The method of manufacture (6) of Figure 20 may also include certain additional operations represented in Figures 21 and 22. In Figure 21, the additional operation consists of moving some or all of the support points (11) from their initial position (11 a, 11 b, 11c, 11 d, 11e, 11f, 11 g, 11 h, 11i, 11j), around which the fibre-based filament (5) has been wound, to a final position (11a', 11 b', 11c', 11 d', 11e', 11f', 11 g', 11 h', 11i', 11j'). This movement takes place when the still hot fibre-based filament (5) has finished being wound around the support points (11) and prior to proceeding to the removal of the fibre part (4). The final position provides the fiber part (4) not only with convex shapes (13), feasible with simple winding, but also with concave shapes (14) and further convex shapes (13) which result from the concave shapes (14).

In the case of Figure 22, according to the invention, the additional operation allows the option of giving the fibre part (4) a three-dimensional shape in the method of manufacture (6). By three-dimensional, it is understood that the fibre part (4) is not arranged on the imaginary plane (16) upon or in which the support points (11) shall be placed in their initial position. This is achieved by giving the rotating table (8) of the aforementioned transversal movement (10) and/or giving the support points (11) the capacity to move not only along the imaginary plane (16) upon which they are positioned, but also transversely, i.e., in any direction which is not on the imaginary plane (16), regardless of whether it is orthogonal or not to the imaginary plane (16). This capacity of transversal movement of the support points (11) is shown in the example of the figure, in which it can be seen how, once the fibre part (4) has been developped or conformed in accordance with the detailed explanation of Figure 21, certain support points (11a, 11 b, 11c, 11 d, 11e, 11f) make a transversal movement (17) to a final position (11a', 11b', 11c', 11d', 11e', 11f'). By means of this movement, in the present example the ends (15a, 15b) of the fibre part (4) are moved from an initial position (15a, 15b) associated with a two-dimensional fibre part (4), to a final position (15a', 15b') which gives the fibre part (4) a three-dimensional shape.

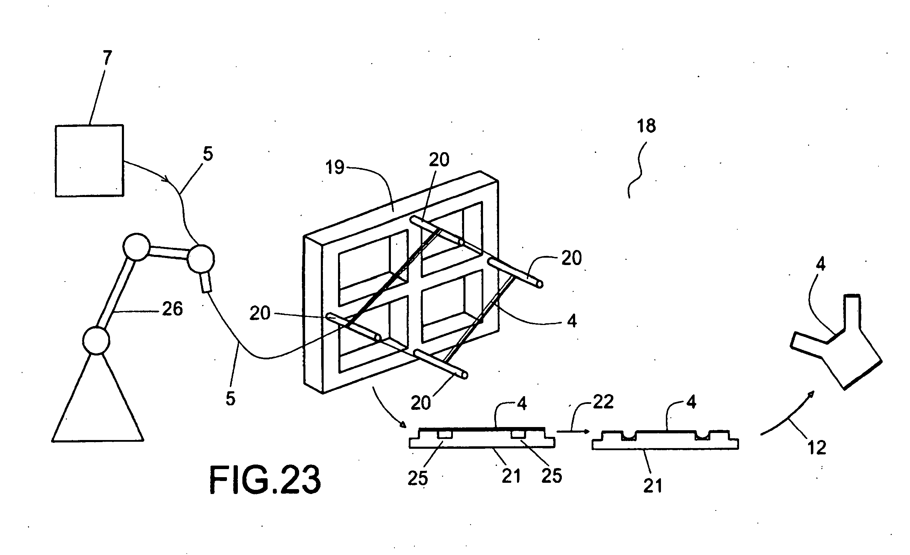

Figure 23 shows a second method of manufacture (18) of a three-dimensional fibre part (4), later to be used as a reinforcement (3) in a reinforced part (1). In this method of manufacture (18), a fibre-based filament (5) is fed by an application means (26) to a support (19) provided with some support points (20) to support the fibre-based filament (5), in such a way that the application means (26) winds the fibre-based filament (5) around the support (19), obtaining a first fibre part (4). The support points (20), like in the method of manufacture (6) of Figure 20, may be able to move non-transversely in order to give the fibre part (4) a specific two-dimensional shape. The two-dimensional fibre part (4) is subsequently placed in a reception area (25) duly made in a tool or mould (21). A three-dimensional process or shaping (22) is applied to the fibre part (4), which alters the two-dimensional form of the fibre part (4) to give the fibre part (4) a three-dimensional shape, in accordance with the reception area (25). Once the three-dimensional fibre part (4) is consolidated, it is removed (12) from the mould (21) either manually or using a robot.

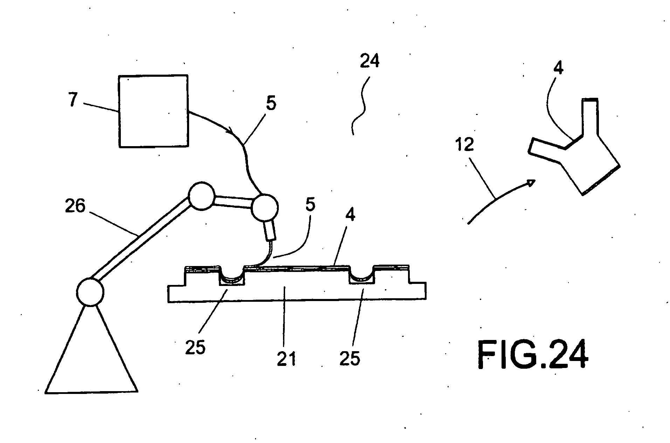

Figure 24 shows a third method of manufacture (24) of a three-dimensional fibre part (4). This method of manufacture (24) is based on the direct application of the fibre-based filament (5) onto a tool or a mould (21). I.e., in this method (24) there is no previous external winding of the fibre-based filament (5), but the fibre-based filament (5) is applied directly to the mould (21) by means of an application means (26) and gradually adopts the shape of the reception area (25) of the mould (21). Therefore, using this method of manufacture (24) it is possible to directly obtain a unidirectional, continuous and three-dimensional fibre part (4). On another hand, it should be noted that the present method of manufacture (24) can equally be used to make a two-dimensional fibre part (4), the reception area (25) of the mould (21) is shaped appropriately.

Both the method of manufacture (18) of Figure 23 and the method of manufacture (24) of Figure 24 allow the manufacture of fibre parts (4) of unidirectional fibre-based filaments (5) with convex (13) and concave shapes (14).

Figure 25 shows a method of manufacture (27) of a three-dimensional fibre part (4) in accordance with the invention based on a fibre-based filament (5) arranged in a unidirectional and continuous manner. This method of manufacture (27) is similar to the previous method of manufacture (24) in that an application means (26) performs a direct application of the fibre-based filament (5) to a two-dimensional or three-dimensional reception area (25), with the difference that in the present method of manufacture (27), the reception area (25) is located in the main part (2) itself, i.e., in a fundamental part of the reinforced part (1). In other words, the fourth method of manufacture (27) mainly consists of the direct application and adhesion of the fibre-based filament (5) to the part to be reinforced. This method of manufacturing (27) has the advantage that after having welded the fibre-based filament (5) or the fibre part (4) respectively to or with the main part (2), no further measures, as post-pressure applications and/or over-moulding is necessary in order to come a consolidated fibre part (4) or reinforced part (1) respectively. The fibre-based filament (5) is preheated and is preferably equipped with a coating, made out of a material which is chemically compatible with the material that the main part (2) is made of. Once the fibre-based filament (5) has been directly applied to the main part (2), both parts (2, 4) become welded when the fibre part (4) cools down and consolidates.The surfaces of the main part (2) may be prepared prior to applying the fibre-based filament (5) in order to optimize the welding process, whereby this preparation may consist of a pre-blazing of the surface of the main part (2), a chemical treatment, a heat application by contact, a convection of air and/or gas, a jet of air and/or gas, etc. Furthermore, the invention contemplates the refrigeration of the fibre-based filament (5) to accelerate its consolidation or solidification respectively, for example, the application of a jet of air and/or gas at an appropriate temperature.

It should be noted that the main part (2) itself is separately handable or manipulable prior to the application of the fibre-based filament (5) onto it. For this reason the main part (2) may have been solidified or consolidated to such an extent that it is hard-shaped or stiff enough, preferably in having cooled down to a temperature below the solidification temperature or the glass transition temperature respectively of its polymer matrix. Before applying the fibre-based filament (5) to the main part (2), it may be located in a mould or tool used to manufacture the main part (2), having a surface to which the fibre-based filament (5) is intended to be applied to, which surface has a surface temperature above the solidification or glass transition temperature of the polymer matrix of the main part (2). According to an advantageous embodiment of the invention, the reinforced part (1) may be manufactured by processing of the main part (2) in the first heat, preferably in applying the fibre-based filament (5) onto the hot main part (2).

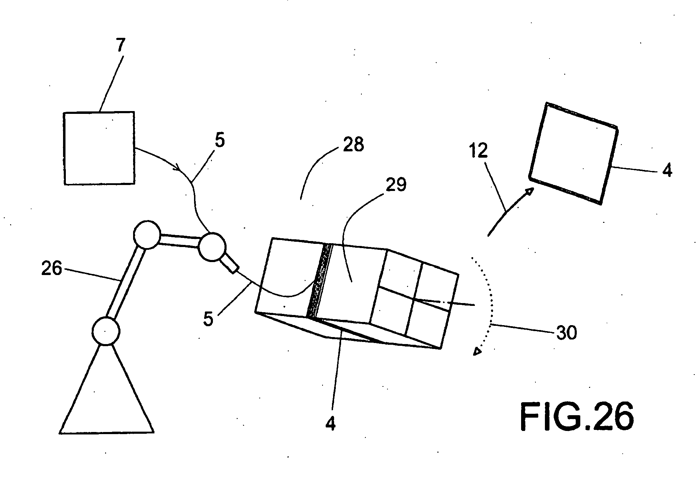

Figure 26 shows a fifth method of manufacture (28) of a fibre part (4), to be used as a reinforcement (3) of a reinforced part (1). In this method of manufacture (28), a fibre-based filament (5) is fed by means of an application means (26) to a support (29) or mandrel whose cross-section may present any shape and coincide with the final shape of the fibre part (4). This support (29) has a rotating movement (30) in such a way that the fibre-based filament (5) is wound around the support (29) and the fibre part (4) is gradually conformed. Once completed, a suitable robot (not shown) removes (12) the fibre part (4) from the support (29). This method of manufacture (28) allows two-dimensional fibre parts (4) without concave forms to be manufactured. Furthermore, it is possible to produce more than one fibre part (4) on the same support (29). In this fifth method of manufacture (28) the option (not shown) of not removing the finished fibre part (4) from the support (29) is considered, i.e., it is possible that at least part of this support (29) forms part of the reinforcement (3) of the reinforced part (1), just as the fibre part (4) does.

In all of the methods of manufacture (6, 18, 24, 27, 28) the winding of the continuous fibre-based filament (5) may be of any type, i.e., it may or may not include an overlapping or intertwining of the different loops of the fibre-based filament (5), a variable number of loops of the fibre-based filaments (5), or in general any variance which may be given to the winding.

For those methods of manufacture (6, 18, 24, 28) in which the fibre part (4) is wound independently or externally from the main part (2), i. e. when the fibre part (4) is manufactured firstly to a separately handable or manipulable part which is then connected or joined to or with the main part (2), the invention contemplates a mechanism to connect or join the fibre part (4) to the main part (2) in order to make up the reinforced part (1). Another mechanism which is not part of the invention consists of introducing the fibre part (4) into a mould or tool and over-moulding with a thermoplastic or thermostable material, in such a way that the main part (2) is conformed and consolidated over the fibre part (4), a connection which may be favoured by choosing a thermoplastic or thermostable material which is chemically compatible with the resin coating or polymer matrix of the fibre-based filament (5) which makes up the fibre part (4), and may be even by adding subsequent mechanical connection methods to reinforce this connection. The mechanism consists of assembling the fibre part (4) to a pre-shaped main part (2), using appropriate connection means.

As far as the overmoulding mechanism is concerned, the mould or tool into which the fibre part (4) shall be inserted and in which the main part (2) shall be overmoulded shall preferably have suitable reception areas to receive the fibre part (4). These reception areas may be made in the shape of external walls to the fibre part (4) so that the fibre part (4) is placed inside the area defined by these walls, in the form of internal walls to the fibre part (4) so that the fibre part (4) is positioned leaving the internal walls, as a combination of internal or external walls, or as a groove similar to that of the fibre part (4).

In all methods of the present invention, a continuous filament which is generally referred to as "fibre-based filament" is used. This denomination is used throughout this document in order to encompass the possible types of fibre filaments used. On one hand, the invention contemplates the use of a "fibre-based filament" made of at least one fibre filament either with a resin coating or without a resin coating. On another hand, the "fibre-based filament" can be at least one fibre filament combined or not with polymeric matrix filaments. The resin coating and the polymeric matrix is made of a thermoplastic resin, and may be applied to a fibre filament by means of an impregnation process. In those cases in which the "fibre-based filament" has a resin coating or is accompanied by a polymeric matrix (the most common when using thermoplastic resins), it is necessary to subject the filament to a pre-heating process and/or a pre-cooling process for its correct handling. In any case, for the purpose of the present invention, these pre-heating or pre-cooling processes are considered to be part of the process to obtain the "fibre-based filament", which forms the starting point of the processes defined by the invention, which have been encompassed in the initial process (7) in the figures. The initial process (7) intends to represent the preparation or obtaining of any type of fibre-based filament all set to be wound or applied. On another hand, the "fibre-based filament" may consist of various fibre filaments interlinked or grouped in any manner. On another hand, the fibre used to shape the fibre-based filament may be fibre glass, carbon fibre, aramide fibre, polyester fibre, natural fibre or another suitable fibre. In this sense, the fibre-based filament may either consist of fibres of a single type (for example, only fibre glass) or combine different types of fibres.

In certain cases, especially depending on the type of fibre-based filament (5) that is used, the aforementioned methods of manufacture may consider certain actions which allow the temperature of the fibre-based filament (5) to be controlled.

For example and not in accordance with the invention, if a fibre-based filament (5) consisting of a coating or thermoplastic matrix (32) is used, the winding operations to a support (8, 19), three-dimensional shaping in a mould (21) and/or direct application to a mould (21) should be carried out at a controlled temperature in order to maintain the flexibility of the fibre part (4). Furthermore, the final fibre part (4) should subsequently be cooled prior to its removal (12) for the assembly or overmoulding of the main part (2):
- The winding phase around the support points (11) in the method of manufacture (6) of Figure 20 is carried out inside an oven with controlled atmosphere temperature, and when the fibre part (4) is shaped, this temperature descends to below the fusion point of this thermoplastic mould (32) so that the fibre part (4) consolidates and is manipulable for its removal (12);
- in the method of manufacture (18) of Figure 23, the two-dimensional winding and three-dimensional shaping operations are performed inside an oven with controlled atmosphere temperature, and once the definitive shape of the fibre part (4) is achieved, the fibre part (4) is consolidated for example by tempering the tool or mould (21) to a lower temperature which is low enough to solidify the thermoplastic;
- In the method of manufacture (24) of Figure 24, the mould (21) is at an appropriate temperature, and the fibre part (4) remains inside the mould (21) for the period required for the consolidation of the thermoplastic, enabling it to be removed (12).

In contrast, when using a fibre-based filament (5) comprising a coating or thermostable matrix (32) a polymerization or curing process shall be required to consolidate and harden the thermostable or thermoset respectively. Therefore, the shaped fibre part (4) should be subjected to an appropriate temperature for a sufficient period of time so that the polymerization reaction may occur, prior to its removal.

The matrix material of the main part (2) and/or the matrix material of the fibre-based filament (5) is preferably a thermoplastic polymer such as polypropylene (PP), polyamide (PA), polyethylenetherephtalate (PET), polybutylenetherephtalate (PBT), polyphenylsulfide (PPS) or polyetheretherketone (PEEK). Further on, the matrix material of the main part (2) may be reinforced by discontinuous short or long fibres. These fibres may be of the same material or of another material as compared to the fibres of the fibre filament (31).

As for how to achieve the relative rotating movement between the application means (26) of the fibre-based filament (5) and the element (8, 19, 21, 2, 29) upon which the application means (26) winds or applies the fibre-based filament (5), the invention logically considers different embodiments: that the winding of the fibre-based filament (5) is achieved by a mobile application means (26) which applies this fibre-based filament (5) to a fixed element (8, 19, 21, 2, 29), by means of a fixed application means (26) which applies the fibre-based filament (5) to a mobile element (8, 19, 21, 2, 29), or by any other method which allows the winding or continuous application of the fibre-based filament (5) to form the fibre part (4) in accordance with the invention.

The application means (26) may consist of at least one handling or manipulating robot (26). The application means (26) may comprise a handling or manipulating head or a laying device, both of which may be equipped with guiding-, shaping- and/or pressing-on means, such as guide rollers and/or pressure rollers (not shown) for guiding, shaping and/or pressing the fibre-based filament (5) to or onto or on the support points (11, 20), the support or mandrel (29), the tool or mould (21), and/or the main part (4). Further on, the application means (26) may be equipped with a gas-supplying device (not shown) with which a convection and/or jet of hot air and/or gas may be transferred to the surface of the main part (2) to which the fibre-based filament (5) is inteded to be directly applied, in order to optimise the welding process, and/or with which a convection and/or jet of cold air and/or gas may be transferred to the in-situ welded fibre part (4) or the reinforced part (1) respectively, in order to accelerate its solidification or may be transferred to the support points (11, 20), to the support or mandrel (29), and/or to the mould (21). It should be noted that the reinforced part (1) may be manufactured advantageously according to at least one of the methods (6, 18, 24, 27, 28) as also described and defined before and/or in the accompanying claims.

## Claims

1. Method of manufacture (27) of a reinforced part (1 ) provided with a main part (2) and at least one reinforcement (3), where this method of manufacture (27) is **characterized in that** it comprises the steps of:
- directly applying, by means of an application means (26), at least one pre-heated continuous fibre-based filament (5) on the main part (2), where there exists a relative movement between said application means (26) and said main part (2) so that the fibre-based filament (6) is arranged on the main part (2) to obtain a fibre part (4) of fibre-based filament (5) in-situ,
- in-situ welding of the fibre part (4) and the main part (2), being the fibre part (4) at least part of the reinforcement (3) of the reinforced part (1),
- the main part (2) having a thermoplastic polymer matrix and having a surface to which the fibre-based filament (5) is intended to be applied to, which surface has - before applying the fibre-based filament onto it - a surface temperature above the solidification temperature or glass transition temperature of the thermoplastic polymer matrix of the main part (2),
- the matrix material of the main part (2) is polypropylene (PP), polyamide (PA), polyethylenetherephtalate (PET), polybutylenetherephtalate (PBT), polyphenylsulfide (PPS) or polyetheretherketone (PEEK),
- once the fibre-based filament (5) has been directly applied to the main part (2), both parts (2, 4) become welded when the fibre part (4) cools down and consolidates.

2. Method of manufacure (27) of a reinforced part (1), according to claim 1, **characterized in that** the fibre-based filament (5) is accompanied by or consisting of a thermoplastic polymeric matrix, whereby the matrix material of the fibre-based filament (5) is a thermoplastic polymer, namely polypropylene (PP), polyamide (PA), polyethylenetherephtalate (PET), polybutylenetherephtalate (PBT), polyphenylsulfide (PPS) or polyetheretherketone (PEEK).

3. Method of manufacure (27) of a reinforced part (1), according to claim 1 or 2, **characterized in that** the fibre-based filament (5) is arranged in a substantially unidirectional manner in the main part (2).

4. Method of manufacture (27) of a reinforced part (1), according to one of claims 1 - 3, **characterized in that** the fibre-based filament (5) is arranged in a substantially continuous manner in the main part (2).

5. Method of manufacture (27) of a reinforced part (1), according to one of claims 1-4, **characterized in that** the welded connection between the fibre part (4) and the main part (2) is reinforced with other appropriate connection means.

6. Method of manufacture (27) of a reinforced part (1), according to one of claims 1 - 5, **characterized in that** the main part (2) is subjected to a pro treatment, prior to the direct application of the fibre-based filament (5), to optimize the in-sittu welding process of the fibre part (4) and the main part (2).

7. Method of manufacture (27) of a reinforced part (1), according to one of claims 1 -6, **characterized in that** the main part (2) Is separately manipulable before the fibre-based filament (5) is applied onto it.

8. Method of manufacture (27) of a reinforced part (1), according to claim 7, **characterized in that** the main part (2) is - before applying the fibre-based filament (5) onto it -solidified so that it is separately manipulable.

9. Method of manufacture (27) of a reinforced part (1), according to one of claims 1-8, **characterized in that** the main part (2) is - before applying the fibre-based filament onto it - located in a mound or tool, used to manufacture the main part (2), the main part (2) having a surface to which the fibre-based filament (5) is intended to be applied to, which surface has a surface temperature above the solidification temperature or glass transition temperature of the polymer matrix of the main part (2).

10. Method of manufacture (27) of a reinforced part (1), according to one of claims 1-9, **characterized in that** the reinforced part (1) is manufactured by processing the main part (2) in the first heat.

11. Method of manufacture (6, 18, 24, 27, 28) of a reinforced part (1), according to one of claims 1-10, **characterized in that** the application means (26) is equipped with a gas-supplying device with which a convection and/or jet of hot air and/or gas may be transferred to the surface of the main part (2), to the support points (11, 20), to the support or mandrel (29) and/or to the mould (21) to which the fibre-based filament (5) is intended to be applied to, and/or with which a convection and/or jet of cold air and/or gas may be transferred to the in-situ welded fibre part (4) or the reinforced part (1) respectively, to the support points (11, 20), to the support or mandrel (29), and/or to the mould (21).

12. Method of manufacture (6, 18, 24, 27, 28) of a reinforced part (1), according to one of claims 1-11, **characterized in that** the application means (26) comprises pressing-on means for pressing the fibre-based filament (5) onto the main part (2), onto the support points (11, 20), onto tho support (20), and/or onto the mould (21), e. g. in the form of at least one pressure roller.

## Patentansprüche

1. Verfahren zur Herstellung (27) eines verstärkten Teils (1), welches über einen Hauptteil (2) und wenigstens eine Verstärkung (3) verfügt, wobei dieses Verfahren zur Herstellung (27) **dadurch gekennzeichnet ist, dass** es die Schritte umfasst:
- direktes Aufbringen, mittels eines Aufbringungsmittels (26), wenigstens eines vorgewärmten, faserbasierten Endlosfadens (5) auf das Hauptteil (2), wobei es eine relative Bewegung zwischen dem Aufbringungsmittel (26) und dem Hauptteil (2) gibt, so dass der faserbasierte Faden (5) auf dem Hauptteil so angeordnet wird, dass ein Faserteil (4) aus dem faserbasierten Faden (5) vor Ort erhalten wird,
- vor Ort Verschweißen des Faserteils (4) und des Hauptteils (2), wobei das Faserteil (4) wenigstens Teil der Verstärkung (3) des verstärkten Teils (1) ist,
- wobei das Hauptteil (2) eine thermoplastische Polymermatrix und eine Oberfläche aufweist, auf welche der faserbasierte Faden (5) aufgebracht werden soll und welche - vor dem Aufbringen des faserbasierten Fadens darauf - eine Oberflächentemperatur über der Erstarrungstemperatur oder Glasübergangstemperatur der thermoplastischen Polymermatrix des Hauptteils (2) aufweist,
- wobei das Matrixmaterial des Hauptteils (2) Polypropylen (PP), Polyamid (PA), Polyethylenterephthalat (PET), Polybutylenterephthalat (PBT), Polyphenylensulfid (PPS) oder Polyetheretherketon (PEEK) ist,
- sobald der faserbasierte Faden (5) direkt auf das Hauptteil (2) aufgebracht wurde, beide Teile (2, 4) verschweißt werden, wenn der Faserteil (4) abkühlt und sich verfestigt.

2. Verfahren zur Herstellung (27) eines verstärkten Teils (1) gemäß Anspruch 1, **dadurch gekennzeichnet, dass** der faserbasierte Faden (5) zu einer thermoplastischen Polymermatrix gehört oder aus ihr besteht, wobei das Matrixmaterial des faserbasierten Fadens (5) ein thermoplastisches Polymer, nämlich Polypropylen (PP), Polyamid (PA), Polyethylenterephthalat (PET), Polybutylenterephthalat (PBT), Polyphenylensulfid (PPS) oder Polyetheretherketon (PEEK) ist.

3. Verfahren zur Herstellung (27) eines verstärkten Teils (1) gemäß Anspruch 1 oder 2, **dadurch gekennzeichnet, dass** der faserbasierte Faden (5) im Wesentlichen gleichlaufend bzw. unidirektional im Hauptteil (2) angeordnet ist.

4. Verfahren zur Herstellung (27) eines verstärkten Teils (1) gemäß einem der Ansprüche 1 - 3, **dadurch gekennzeichnet, dass** der faserbasierte Faden (5) im Wesentlichen fortlaufend bzw. kontinuierlich im Hauptteil (2) angeordnet ist.

5. Verfahren zur Herstellung (27) eines verstärkten Teils (1) gemäß einem der Ansprüche 1 - 4, **dadurch gekennzeichnet, dass** die verschweißte Verbindung zwischen dem Faserteil (4) und dem Hauptteil (2) mit anderen geeigneten Verbindungsmitteln verstärkt ist.

6. Verfahren zur Herstellung (27) eines verstärkten Teils (1) gemäß einem der Ansprüche 1 - 5, **dadurch gekennzeichnet, dass** das Hauptteil (2) vor dem direkten Aufbringen des faserbasierten Fadens (5) einer Vorbehandlung unterzogen wird, um das Vor-Ort-Verschweiß-Verfahren des Faserteils (4) und des Hauptteils (2) zu optimieren.

7. Verfahren zur Herstellung (27) eines verstärkten Teils (1) gemäß einem der Ansprüche 1 - 6, **dadurch gekennzeichnet, dass** der Hauptteil (2) getrennt gehandhabt werden kann, bevor der faserbasierte Faden (5) darauf aufgebracht wird.

8. Verfahren zur Herstellung (27) eines verstärkten Teils (1) gemäß Anspruch 7, **dadurch gekennzeichnet, dass** der Hauptteil (2) - vor dem Aufbringen des faserbasierten Fadens darauf - erstarrt, so dass er separat handhabbar ist.

9. Verfahren zur Herstellung (27) eines verstärkten Teils (1) gemäß einem der Ansprüche 1 - 8, **dadurch gekennzeichnet, dass** sich der Hauptteil (2) - vor dem Aufbringen des faserbasierten Fadens darauf - in einer Form oder einem Werkzeug befindet, weiche für die Herstellung des Hauptteils (2) verwendet werden, wobei der Hauptteil (2) eine Oberfläche aufweist, auf welche der faserbasierte Faden (5) aufgebracht werden soll, wobei die Oberfläche eine Oberflächentemperatur über der Erstarrungstemperatur oder Glasübergangstemperatur der Polymermatrix des Hauptteils (2) aufweist.

10. Verfahren zur Herstellung (27) eines verstärkten Teils (1) gemäß einem der Ansprüche 1 - 9, **dadurch gekennzeichnet, dass** der verstärkte Teil (1) durch Verarbeitung des Hauptteils (2) in der ersten Hitze hergestellt wird.

11. Verfahren zur Herstellung (6, 18, 24, 27, 28) eines verstärkten Teils (1) gemäß einem der Ansprüche 1 - 10, **dadurch gekennzeichnet, dass** das Aufbringungsmittel (26) mit einer gaszuführenden Vorrichtung ausgerüstet ist, mit welcher eine Konvektion und/oder ein Strahl heißer Luft und/oder Gas zu der Oberfläche des Hauptteils (2), zu den Stützenpunkten (11, 20), zu der Stütze oder dem Dorn (29) und/oder zu der Form (21) transferiert werden kann, auf welche der faserbasierte Faden (5) aufgebracht werden soll, und/oder mit welche eine Konvektion und/oder ein Strahl kalter Luft und/oder Gas zu dem vor Ort verschweißten Faserteil (4) bzw. dem verstärkten Teil (1), zu den Stützenpunkten (11, 20), zu der Stütze oder dem Dorn (29) und/oder zu der Form (21) transferiert werden kann.

12. Verfahren zur Herstellung (6, 18, 24, 27, 28) eines verstärkten Teils (1) gemäß einem der Ansprüche 1-11, **dadurch gekennzeichnet, dass** das Aufbringungsmittel (25) Aufpressmittel, z.B. in Form wenigstens einer Druckrolle, umfasst, um den faserbasierten Faden (5) auf das Hauptteil (2), auf die Stützenpunkte (11, 20), auf die Stütze (29) und/oder auf die Form (21) zu pressen.

## Revendications

1. Procédé de fabrication (27) d'une pièce renforcée (1) dotée d'une portion principale (2) et d'au moins un renfort (3), dans lequel ce procédé de fabrication (27) est **caractérisé en ce qu'**il comprend les étapes consistant à :
- appliquer directement, au moyen d'un moyen d'application (26) au moins un filament préchauffé (5) à base de fibre continue sur la portion principale (2), de sorte qu'il existe un mouvement relatif entre ledit moyen d'application (26) et ladite portion principale (2), et de telle façon que le filament à base de fibre (5) est agencé sur la portion principale (2) pour obtenir in-situ une partie de fibre (4) de filament (5) à base de fibre,
- souder in situ la partie de fibre (4) et la portion principale (2), la partie de fibre (4) faisant au moins partie du renfort (3) de la pièce renforcée (1),
- la portion principale (2) ayant une matrice de polymère thermoplastique et ayant une surface sur laquelle le filament à base de fibre (5) est destiné à être appliqué, ladite surface ayant, avant d'appliquer le filament à base de fibre sur elle-même, une température de surface au-dessus de la température de solidification ou de la température de transition vitreuse de la matrice de polymère thermoplastique de la portion principale (2),
- le matériau de matrice de la portion principale (2) est du polypropylène (PP), polyamide (PA), du polyéthylène téréphtalate (PET), du polybutylène téréphtalate (PBT) du polyphénylène sulfure (PPS) ou une polyétheréthercétone (PEEK),
- une fois que le filament à base de fibre (5) a été directement appliqué sur la portion principale (2), les deux portions (2, 4) deviennent soudées quand la partie de fibre (4) se refroidit et se consolide.

2. Procédé de fabrication (27) d'une pièce renforcée (1) selon la revendication 1, **caractérisé en ce que** le filament à base de fibre (5) est accompagné de ou est constitué d'une matrice polymère thermoplastique, telle que le matériau de matrice du filament à base de fibre (5) est un polymère thermoplastique, à savoir polypropylène (PP), polyamide (PA), polyéthylène téréphtalate (PET), polybutylène téréphtalate (PBT), polyphénylène sulfure (PPS) ou polyétheréthercétone (PEEK).

3. Procédé de fabrication (27) d'une pièce renforcée (1) selon la revendication 1 ou 2, **caractérisé en ce que** le filament à base de fibre (5) est agencé de manière sensiblement unidirectionnelle dans la portion principale (2).

4. Procédé de fabrication (27) d'une pièce renforcée (1) selon l'une des revendications 1 à 3, **caractérisé en ce que** le filament à base de fibre (5) est agencé d'une manière sensiblement continue dans la portion principale (2).

5. Procédé de fabrication (27) d'une pièce renforcée (1) selon l'une des revendications 1 à 4, **caractérisé en ce que** la connexion soudée entre la partie de fibre (4) et la portion principale (2) est renforcée avec d'autres moyens de connexion appropriés.

6. Procédé de fabrication (27) d'une pièce renforcée (1) selon l'une des revendications 1 à 5, **caractérisé en ce que** la portion principale (2) est soumise à un prétraitement, avant l'application directe du filament à base de fibre (5), pour optimiser le processus de soudage in situ de la partie de fibre (4) et de la portion principale (2).

7. Procédé de fabrication (27) d'une pièce renforcée (1) selon l'une des revendications 1 à 6, **caractérisé en ce que** la portion principale (2) est capable d'être manipulée séparément avant d'appliquer le filament à base de fibre (5) sur elle-même.

8. Procédé de fabrication (27) d'une pièce renforcée (1) selon la revendication 7, **caractérisé en ce que** la portion principale (2) est, avant d'appliquer le filament à base de fibre (5) sur elle-même, solidifiée de telle sorte qu'elle est capable d'être manipulée séparément.

9. Procédé de fabrication (27) d'une pièce renforcée (1) selon l'une des revendications 1 à 8, **caractérisé en ce que** la portion principale (2) est, avant d'appliquer le filament à base de fibre sur elle-même, placée dans un moule ou un outil, utilisé pour fabriquer la portion principale (2), la portion principale (2) ayant une surface sur laquelle le filament à base de fibre (5) est destiné à être appliqué, ladite surface présentant une température de surface au-dessus de la température de solidification ou de la température de transition vitreuse de la matrice de polymère de la portion principale (2).

10. Procédé de fabrication (27) d'une pièce renforcée (1) selon l'une des revendications 1 à 9, **caractérisé en ce que** la pièce renforcée (1) est fabriquée en traitant la portion principale (2) en premier par voie thermique.

11. Procédé de fabrication (6, 18, 24, 27, 28) d'une pièce renforcée (1) selon l'une des revendications 1 à 10, **caractérisé en ce que** le moyen d'application (26) est équipé d'un dispositif d'alimentation de gaz avec lequel de l'air chaud et/ou du gaz sous forme de jet ou de convection peut être transféré vers la surface de la portion principale (2), vers les points de support (11, 20), vers le support ou mandrin (29) et/ou vers le moule (21), auquel le filament à base de fibre (5) est destiné à être appliqué, et/ou avec lequel de l'air froid et/ou un gaz froid sous forme de convection et/ou de jet peut être transféré vers la partie de fibre (4) soudée in situ ou vers la partie renforcée (1) respectivement, vers les points de support (11, 20), vers le support ou mandrin (29), et/ou vers le moule (21).

12. Procédé de fabrication (6, 18, 24, 27, 28) d'une pièce renforcée (1) selon l'une des revendications 1 à 11, **caractérisé en ce que** le moyen d'application (26) comprend un moyen de pressage pour presser le filament à base de fibre (5) sur la portion principale (2), sur les points de support (11, 20), sur le support (29) et/ou sur le moule (21), par exemple sous la forme d'au moins un galet de pressage.
